(19) Europäisches Patentamt
European Patent Office
Office européen des brevets

(11) **EP 1 101 162 B1**

## (12) EUROPÄISCHE PATENTSCHRIFT

(45) Veröffentlichungstag und Bekanntmachung des Hinweises auf die Patenterteilung:
**29.01.2003 Patentblatt 2003/05**

(21) Anmeldenummer: **99945909.2**

(22) Anmeldetag: **05.07.1999**

(51) Int Cl.⁷: $G06F\ 7/62$, $G06F\ 7/68$

(86) Internationale Anmeldenummer:
**PCT/DE99/02070**

(87) Internationale Veröffentlichungsnummer:
**WO 00/007095 (10.02.2000 Gazette 2000/06)**

(54) **VERFAHREN UND VORRICHTUNG ZUR ERZEUGUNG VON TAKTSIGNALEN**

METHOD AND DEVICE FOR GENERATING CLOCK SIGNALS

PROCEDE ET DISPOSITIF POUR LA PRODUCTION DE SIGNAUX D'HORLOGE

(84) Benannte Vertragsstaaten:
**DE FR GB IT**

(30) Priorität: **24.07.1998 US 122056**

(43) Veröffentlichungstag der Anmeldung:
**23.05.2001 Patentblatt 2001/21**

(73) Patentinhaber: **Infineon Technologies AG**
**81669 München (DE)**

(72) Erfinder:
- **ROHM, Peter**
  **D-85276 Pfaffenhofen (DE)**
- **LETEINTURIER, Patrick**
  **D-81739 München (DE)**

(74) Vertreter: **Jannig, Peter, Dipl.-Ing. et al**
**Jannig & Repkow,**
**Patentanwälte,**
**Klausenberg 20**
**86199 Augsburg (DE)**

(56) Entgegenhaltungen:
**EP-A- 0 501 597**

- **DULK DEN R C ET AL: "A VERSATILE CMOS RATE MULTIPLIER/VARIABLE DIVIDER" IEEE JOURNAL OF SOLID-STATE CIRCUITS,US,IEEE INC. NEW YORK, Bd. SC-18, Nr. 3, Seite 267-272 XP000648128 ISSN: 0018-9200**
- **KARR G: "PROGRAMMABLE FREQUENCY COUNTER" NEW ELECTRONICS,GB,INTERNATIONAL THOMSON PUBLISHING, LONDON, Bd. 16, Nr. 19, Seite 37 XP000743973 ISSN: 0047-9624**

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 8, d.h. ein Verfahren und eine Vorrichtung zur Erzeugung von Taktsignalen, durch welche Zeiträume in eine gewünschte Anzahl von im wesentlichen gleich großen Abschnitten unterteilbar sind.

Verfahren und Vorrichtungen dieser Art werden beispielsweise, aber bei weitem nicht ausschließlich in Steuereinrichtungen zur Ansteuerung elektrischer Einrichtungen benötigt, und zwar insbesondere dann, wenn die Ansteuerung abhängig von bestimmten Zuständen der zu steuernden Einrichtung (beispielsweise abhängig von der Stellung eines rotierenden Teils der zu steuernden Einrichtung) erfolgen muß.

Zwar kann die zu steuernde Einrichtung der Steuereinrichtung das Erreichen bestimmter Zustände signalisieren, doch ist es nicht selten der Fall, daß die Erzeugung der an die zu steuernde Einrichtung auszugebenden Steuersignale und/oder deren Ausgabe an die zu steuernde Einrichtung zu Zeitpunkten erfolgen müssen, die nicht mit den Zeitpunkten zusammenfallen, zu denen der Steuereinrichtung das Erreichen eines bestimmten Zustandes signalisiert wird.

Zur Behebung dieses Problems könnte vorgesehen werden, die Anzahl der Zustände, deren Erreichen der Steuereinrichtung signalisiert werden, zu vergrößern. Dies ist jedoch häufig nicht ohne weiteres möglich. Soll beispielsweise die Stellung einer sich drehenden Welle erfaßt werden, so sind die Stellungen der Welle, deren Erreichen der Steuereinrichtung signalisiert werden können, aus praktischen Gründen begrenzt; sie haben einen gegenseitigen Abstand von x Grad, wobei x verständlicherweise nicht beliebig klein gemacht werden kann.

Eine andere Möglichkeit zur Beseitigung des genannten Problems besteht darin, daß in der Steuereinrichtung ein Taktsignal erzeugt wird, durch welches die Zeiträume, die zwischen der Signalisierung des Erreichens bestimmter Zustände der zu steuernden Einrichtung liegen, in mehrere Abschnitte unterteilbar ist.

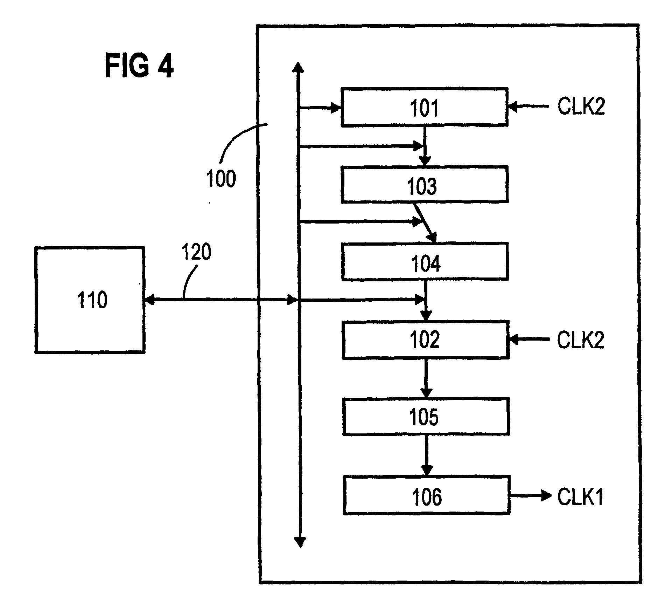

Dies läßt sich beispielsweise durch die in der Figur 4 gezeigte Anordnung erreichen. Die Anordnung gemäß Figur 4 umfaßt eine Steuereinrichtung 100 und eine durch diese zu steuernde Einrichtung 110, wobei die Steuereinrichtung 100 einen ersten Zähler 101, einen zweiten Zähler 102, ein erstes Register 103, ein zweites Register 104, einen Vergleicher 105 und eine Impulserzeugungseinheit 106 umfaßt.

Die Steuereinrichtung 100 und die zu steuernde Einrichtung 110 sind über ein oder mehrere Steuerleitungen 120 miteinander verbunden. Diese Steuerleitungen 120 dienen unter anderem dazu, daß die zu steuernde Einrichtung 110 der Steuereinrichtung 100 das Erreichen bestimmter Zustände signalisiert wird, wobei die bestimmten Zustände im betrachteten Beispiel bestimmte Stellungen einer drehenden Welle sein mögen. Diese Zustände werden nachfolgend der Einfachheit halber als externe Ereignisse bezeichnet.

Das Auftreten eines solchen externen Ereignisses löst in der Steuereinrichtung 100 verschiedene Vorgänge aus. Unter anderem wird der augenblickliche Zählstand des (im Takt eines zweiten Taktsignals CLK2 aufwärts zählenden) ersten Zählers 101 in das erste Register 103 übernommen und dann auf Null zurückgesetzt, wodurch der Inhalt des ersten Registers 103 jeweils die Dauer der Zeit zwischen dem vorletzten und dem letzten externen Ereignis repräsentiert. Im stationären Zustand der zu steuernden Einrichtung 110 ist die Zeit zwischen dem vorletzten und dem letzten externen Ereignis gleich der Zeit zwischen dem letzten und dem nächsten externen Ereignis; die durch den Inhalt des ersten Registers 103 repräsentierte Zeit ist die Zeit, die durch ein in der Steuereinrichtung 100 zu erzeugendes Taktsignal CLK1 in eine gewünschte Anzahl von im wesentlichen gleich großen Abschnitten unterteilt werden soll. Zur Erzeugung dieses Taktsignals wird zunächst der Inhalt des ersten Registers 103 unter gleichzeitigem Verschieben desselben nach rechts in das zweite Register 104 transferiert; das Verschieben des Inhalts des ersten Registers 103 beim Umspeichern in das zweite Register 104 um n Stellen kommt einer Division durch $2^n$ gleich. Der im zweiten Register 104 gespeicherte Wert (das Divisionsergebnis) wird sodann als Anfangswert in den (im Takt des zweiten Taktsignals CLK2 abwärts zählenden) zweiten Zähler 102 geladen und von diesem in dem Takt, in dem der erste Zähler 101 hochzählt, heruntergezählt. Durch den Vergleicher 105 wird fortlaufend überprüft, ob der Zählstand des zweiten Zählers 102 Null erreicht hat. Wird festgestellt, daß der Zählstand des zweiten Zählers 102 Null erreicht hat, so wird die Impulserzeugungseinheit 106 zur Erzeugung eines Taktimpulses veranlaßt und der Zählstand des zweiten Zähler 102 wieder auf den Inhalt des zweiten Registers 104 hochgesetzt, wodurch sich die beschriebenen Vorgänge wiederholen. Im Ergebnis werden dadurch in der Zeit zwischen dem letzten und dem nächsten externen Ereignis $2^n$ Taktimpulse erzeugt.

Diese Taktimpulse stellen das zu erzeugende Taktsignal CLK1 dar. Sie ermöglichen es, daß die Erzeugung von zur Ansteuerung der zu steuernden Einrichtung 110 dienenden Steuersignalen und/oder die Ausgabe derselben zu definierten Zeitpunkten zwischen den externen Ereignissen erfolgen kann.

Allerdings ist eine wie beschrieben erfolgenden Erzeugung dieser zusätzlichen Taktsignale mit einem relativ großen Aufwand verbunden und zudem nicht optimal an die jeweiligen Verhältnisse anpaßbar (die Anzahl der Taktimpulse, die zwischen zwei externen Ereignissen generiert werden können, ist auf $2^n$ beschränkt, kann also keine beliebigen Werte annehmen).

Ein weiteres Verfahren zur Erzeugung von Taktsignalen, durch welche Zeiträume in eine gewünschte Anzahl von im wesentlichen gleich großen Abschnitten unterteilbar sind, ist aus DULK DEN R C ET AL: 'A VERSATILE CMOS RATE MULTIPLIER/VARIABLE DIVIDER' IEEE JOURNAL OF SOLID-STATE CIRCUITS, US, IEEE INC. NEW YORK, Bd. SC-18, Nr. 3, Seite 267-272, XP000648128, ISSN: 0018-9200 bekannt. Dieses Verfahren ist zwar flexibler einsetzbar, aber ebenfalls nicht problemlos realisierbar.

Der vorliegenden Erfindung liegt daher die Aufgabe zugrunde, das Verfahren gemäß dem Oberbegriff des Patentanspruchs 1 und die Vorrichtung gemäß dem Oberbegriff des Patentanspruchs 8 derart weiterzubilden, daß sich diese mit minimalem Aufwand praktisch realisieren lassen und dabei dennoch optimal an die jeweiligen Gegebenheiten anpaßbar sind.

Diese Aufgabe wird erfindungsgemäß durch die im kennzeichnenden Teil des Patentanspruchs 1 (Verfahren) bzw. die im kennzeichnenden Teil des Patentanspruchs 8 (Vorrichtung) beanspruchten Merkmale gelöst.

Das erfindungsgemäße Verfahren und die erfindungsgemäße Vorrichtung zeichnen sich dadurch aus,

- daß die Taktsignale basierend auf den Ergebnissen einer wiederholten Subtraktion eines ersten Wertes von einem zweiten Wert erzeugt werden,
- wobei der erste Wert gleich der Anzahl der Abschnitte ist, in die der zu unterteilende Zeitraum zu unterteilen ist,
- wobei der zweite Wert zunächst gleich der in den zu unterteilenden Zeitraum fallenden Anzahl von Taktperioden eines zweiten Taktsignals minus der Anzahl der Abschnitte ist, in die der zu unterteilende Zeitraum zu unterteilen ist, und
- wobei der zweite Wert nach jeder Subtraktion auf das Ergebnis der Subtraktion gesetzt wird,
- daß die Subtraktion des ersten Wertes vom zweiten Wert nur durchgeführt wird, wenn und so lange der zweite Wert größer oder gleich Null ist, und
- daß dann, wenn der zweite Wert kleiner Null ist, anstelle der Subtraktion des ersten Wertes eine Addition eines dritten Wertes durchgeführt wird, wobei der dritte Wert gleich der in den zu unterteilenden Zeitraum fallenden Anzahl von Taktperioden des zweiten Taktsignals minus der Anzahl der Abschnitte ist, in die der zu unterteilende Zeitraum zu unterteilen ist.

Die wiederholte Subtraktion entspricht der Durchführung einer Division nach dem Euklid'schen Divisionsalgorithmus. Die wiederholte Subtraktion des ersten Wertes vom zweiten Wert kommt somit im Ergebnis der bei den eingangs beschriebenen Verfahren und Vorrichtungen praktizierten Division des zweiten Wertes durch den ersten Wert gleich; allerdings muß nicht wirklich eine Division durchgeführt werden. Der Verzicht auf die Division zugunsten der beanspruchten wiederholten Subtraktion sowie die besondere Festlegung der voneinander zu subtrahierenden Werte eröffnet die Möglichkeit, die Taktsignalerzeugung praktisch einfacher zu realisieren und flexibler an die gegebenen Verhältnisse anzupassen, wobei der Grund für die einfachere praktische Realisierbarkeit vor allen darin liegt, daß eine Division insbesondere dann, wenn der Divisor veränderlich sein soll, einen höheren technischen Aufwand erfordert als eine entsprechende wiederholte Subtraktion, und wobei der Grund für die erhöhte Flexibilität vor allem darin liegt, daß keine Einschränkung mehr darauf besteht, die zu unterteilenden Zeiträume in $2^n$ Abschnitte unterteilen zu müssen.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Zeichnung näher erläutert. Es zeigen

Figur 1    die nachfolgend näher beschriebene Anordnung zur Erzeugung von Taktsignalen, durch welche ein Zeitraum in eine Anzahl von im wesentlichen gleich großen Abschnitten unterteilbar ist,

Figur 2    Zeitdiagramme zur Veranschaulichung der Funktion der Anordnung gemäß Figur 1,

Figur 3A    Zeitdiagramme zur Veranschaulichung der Funktion der Anordnung gemäß Figur 1 für den Fall, daß der zu unterteilende Zeitraum kürzer als erwartet ist,

Figur 3B    Zeitdiagramme zur Veranschaulichung der Funktion der Anordnung gemäß Figur 1 für den Fall, daß der zu unterteilende Zeitraum länger als erwartet ist, und

Figur 4    eine herkömmliche Anordnung zur Erzeugung von Taktsignalen, durch welche ein Zeitraum in eine Anzahl von im wesentlichen gleich großen Abschnitten unterteilbar ist.

Das nachfolgend näher beschriebene Verfahren und die nachfolgend näher beschriebene Vorrichtung sind zum Einsatz in einer Steuereinrichtung zum Erzeugen von Steuersignalen für die Ansteuerung elektrischer Einrichtungen vorgesehen.

Die Steuereinrichtung ist im betrachteten Beispiel ein Kraftfahrzeug-Steuergerät. Die durch das Kraftfahrzeug-Steuergerät zu steuernde Einrichtung ist im betrachteten Beispiel der Motor eines Kraftfahrzeuges, insbesondere dessen Kraftstoffeinspritzsystem und dessen Zündsystem. Die Ansteuerung dieser Einrichtungen hängt unter anderem von der Stellung der Kurbelwelle ab, wobei dem Steuergerät das Erreichen vorbestimmter Kurbelwellen-Stellungen mitgeteilt (signalisiert) wird; das Erreichen der vorbestimmten Kurbelwellen-Stellungen wird durch dazu geeignete Sensoren erfaßt. Sensoren dieser Art sind in einer Vielzahl von Ausführungsformen bekannt und bedürfen keiner näheren Beschreibung.

Das Erreichen einer vorbestimmten (durch die zu steuernde Einrichtung signalisierten) Kurbelwellen-Stellung wird nachfolgend verallgemeinert als ein externes Ereignis bezeichnet. Obgleich es in der Praxis neben dem Erreichen einer vorbestimmten Kurbelwellen-Stellung normalerweise eine Vielzahl weiterer externer Ereignisse geben wird, die der Steuereinrichtung durch die zu steuernde Einrichtung signalisiert werden, wird der Begriff "externes Ereignis" vorliegend der besseren Verständlichkeit halber ausschließlich für das Erreichen der zu signalisierenden Kurbelwellen-Stellungen verwendet.

Selbstverständlich sind das beschriebene Verfahren und die beschriebene Vorrichtung nicht nur in Kraftfahrzeug-Steuergeräten einsetzbar, und der zu unterteilende Zeitraum muß auch nicht der Zeitraum zwischen dem Erreichen zweier bestimmter Stellungen einer rotierenden Welle sein. Der Einsatz kann auch in beliebigen anderen Einrichtungen erfolgen, in denen es bestimmte Zeiträume zu unterteilen gilt.

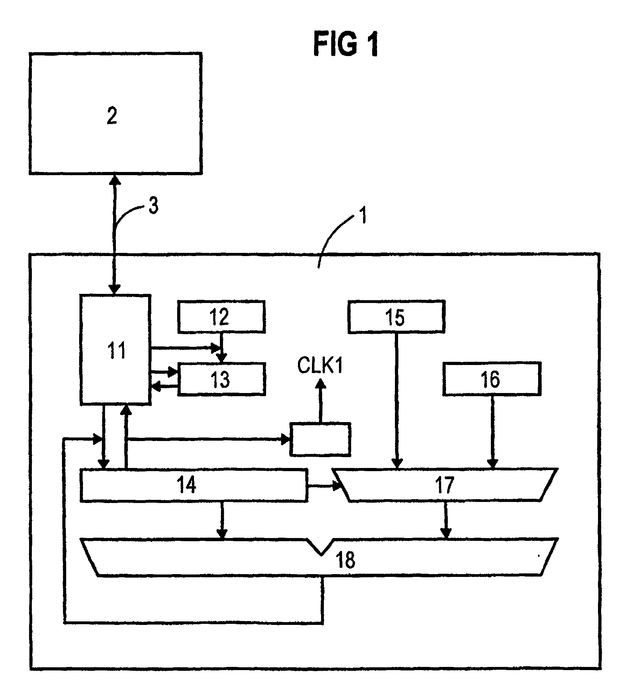

Der Aufbau der nachfolgend näher betrachteten Anordnung ist in Figur 1 veranschaulicht. Die dort gezeigte Anordnung umfaßt eine Steuereinrichtung 1 und eine von dieser zu steuernde Einrichtung 2, wobei die Steuereinrichtung 1 und die zu steuernde Einrichtung 2 über eine oder mehrere Steuerleitungen 3 miteinander verbunden sind. Die Steuereinrichtung 1 umfaßt ihrerseits eine Managementeinheit 11, ein erstes Register 12, einen Zähler 13, ein zweites Register 14, ein drittes Register 15, ein viertes Register 16, einen Multiplexer 17, einen Addierer 18, und eine Taktsignalerzeugungseinrichtung 19. Der Vollständigkeit halber sei darauf hingewiesen, daß die einzelnen Komponenten der Anordnung nur insoweit dargestellt sind und beschrieben werden als es für das vorliegend betrachtete Verfahren und die vorliegend betrachtete Vorrichtung von besonderer Bedeutung ist.

Die zu steuernde Einrichtung 2 signalisiert der Steuereinrichtung das Auftreten externer Ereignisse; was unter den externen Ereignissen vorliegend zu verstehen ist, wurde vorstehend bereits erläutert.

Die Steuereinrichtung 1, genauer gesagt deren Taktsignalerzeugungseinrichtung 19 erzeugt Taktsignale CLK1, durch welche der Zeitraum zwischen zwei externen Ereignissen in mehrere, im wesentlichen gleich große Abschnitte unterteilbar ist. Die Erzeugung der Taktsignale basiert dabei auf den Ergebnissen einer wiederholten Subtraktion eines ersten Wertes von einem zweiten Wert, wobei der erste Wert von der Anzahl der Abschnitte abhängt, in die der zu unterteilende Zeitraum zu unterteilen ist, und wobei der zweite Wert von der Dauer des zu unterteilenden Zeitraums abhängt.

Die Dauer des zu unterteilenden Zeitraums wird im betrachteten Beispiel (wie bei der Steuereinrichtung gemäß Figur 4) durch Zählen der zwischen zwei externen Ereignissen auftretenden Taktperioden eines zweiten Taktsignals ermittelt. Die Ermittlung dieser Anzahl von Taktperioden kann (ebenfalls wie bei der Steuereinrichtung gemäß Figur 4) unter Verwendung eines im Takt des zweiten Taktsignals zählenden Zählers und einer sogenannten Capture-Einheit erfolgen. Bezüglich weiterer Einzelheiten wird auf die Beschreibung der Anordnung gemäß Figur 4, insbesondere auf die Beschreibung des ersten Zähler 101, des ersten Registers 103, und die Übernahme des Zählstandes des ersten Zählers 101 in das erste Register 103 (Capture-Funktion) verwiesen; die Einrichtung zur Ermittlung einer die Dauer des zu unterteilenden Zeitraums repräsentierende Größe ist in Figur 1 nicht gezeigt. Der Vollständigkeit halber sein angemerkt, daß das zweite Taktsignal vorzugsweise eine nur sehr kurze Periodendauer (eine sehr hohe Taktfrequenz) aufweist; je kürzer die Periodendauer (je höher die Taktfrequenz), desto genauer können die Ermittlung der Länge des zu unterteilenden Zeitraumes und dessen Unterteilung erfolgen.

Die erwähnte wiederholte Subtraktion des ersten Wertes vom zweiten Wert wird im betrachteten Beispiel unter Verwendung des Addierers 18 durchgeführt; der Addierer 18 addiert zum zweiten Wert das 2er-Komplement des ersten Wertes. Die Verwendung eines Addierers zur Subtraktion erweist sich als vorteilhaft, weil Addierer billiger sind als Subtrahierer oder kombinierte Addierer/Subtrahierer. Selbstverständlich können zusätzlich oder alternativ zum Addierer 18 ein Subtrahierer und/oder eine kombinierter Addierer/Subtrahierer verwendet werden.

Dem Addierer 18 werden der Inhalt des zweiten Registers 14 und - über den Multiplexer 17 - der Inhalt des dritten Registers 15 oder der Inhalt des vierten Registers 16 zugeführt. Der Addierer 18 addiert den Inhalt des zweiten Registers 14 und den Inhalt des dritten Registers 15 oder den Inhalt des vierten Registers 16 und schreibt das Additionsergebnis in das zweite Register 14; die Additionen erfolgen dabei im Takt des vorstehend bereits erwähnten zweiten Taktsignals.

Das zweite Register 14 und das dritte Register 15 werden beim Auftreten eines externen Ereignisses mit einem nachfolgend als Reload-Wert bezeichneten Wert geladen. Dieser Reload-Wert ist der vorstehend bereits erwähnte zweite Wert, d.h. ein Wert, der auf einer die Dauer des zu unterteilende Zeitraums repräsentierenden Größe basiert. Der im vorliegend betrachteten Beispiel verwendete Reload-Wert ist gleich der in den zu unterteilenden Zeitraum fallenden Anzahl von Taktperioden des zweiten Taktsignals minus der Anzahl der Abschnitte, in die der zu unterteilende Zeitraum unterteilt werden soll. Es sei bereits an dieser Stelle darauf hingewiesen, daß zumindest das zweite Register 14 auch mit einem vom genannten Reload-Wert abweichenden Wert geladen werden kann; wie später noch besser verstanden werden wird, kann dadurch Einfluß auf die Längenverhältnisse der einzelnen Zeitabschnitte Einfluß genommen werden.

Das vierte Register 16 wird mit der Anzahl der Abschnitte, genauer gesagt mit dem 2er-Komplement der Anzahl der Abschnitte geladen, in die der zu unterteilende Zeitraum unterteilt werden soll; die Anzahl der Abschnitte, in die der zu unterteilende Zeitraum unterteilt werden soll, ist der vorstehend bereits mehrfach erwähnte erste Wert.

Welche Werte der Addierer 18 addiert, hängt vom momentanen Inhalt des zweiten Registers 14 ab: wenn und so lange der Inhalt des zweiten Registers 14 größer oder gleich Null (oder kleiner oder gleich einem bestimmten anderen Wert) ist, wird der Multiplexer 17 so angesteuert, daß er den Inhalt des vierten Registers 16 zum Addierer 18 durchschaltet; ist der Inhalt des zweiten Registers 14 kleiner Null (oder kleiner als ein bestimmter anderer Wert), wird der Multiplexer 17 so angesteuert, daß er den Inhalt des dritten Registers 15 zum Addierer 18 durchschaltet.

Es wird nun zunächst der Fall betrachtet, daß der Inhalt des vierten Registers 16 zum Addierer 18 durchgeschaltet wird.

Dann wird durch den Addierer 18 im Takt des zweiten Taktsignals wiederholt die Anzahl der Abschnitte, in die der zu unterteilende Zeitraum unterteilt werden soll (der erste Wert), von dem anfangs mit dem Reload-Wert geladenen zweiten Register 14 (dem zweiten Wert) subtrahiert. Dies erfolgt so lange (so häufig), bis das Ergebnis kleiner Null wird. Wenn das Ergebnis kleiner Null wird, wird durch die Taktsignalerzeugungseinrichtung ein Taktimpuls erzeugt und der Multiplexer 17 umgeschaltet.

Der erzeugte Taktimpuls ist Bestandteil des durch die beschriebene Anordnung zu erzeugenden Taktsignals CLK1.

Das Umschalten des Multiplexers 17 bewirkt, daß bei der nächsten Addition durch den Addierer 18 der Inhalt des zweiten Registers 14 und der Inhalt des dritten Registers 15, d.h. das Ergebnis der vorangegangenen Subtraktionen und der vorstehend bereits erwähnte Reload-Wert addiert werden. Das Ergebnis dieser Addition wird wiederum in das zweite Register 14 geschrieben, wodurch dessen Inhalt wieder positiv wird. Der positive Inhalt des zweiten Registers 14 bewirkt, daß der Multiplexer 17 umgeschaltet wird und wieder der Inhalt des vierten Registers 16 zum Addierer 18 durchgeschaltet wird. Durch den Addierer 18 erfolgt dadurch wieder eine wiederholte Subtraktion der Anzahl der Abschnitte, in die der zu unterteilende Zeitraum unterteilt werden soll, vom Inhalt des zweiten Registers 14. Dies erfolgt wieder so lange (so häufig), bis das Ergebnis kleiner Null wird. Wenn das Ergebnis kleiner Null wird, wird durch die Taktsignalerzeugungseinrichtung 19 wieder ein Taktimpuls erzeugt und der Multiplexer 17 umgeschaltet.

Diese Vorgänge wiederholen sich, bis so viele Taktimpulse erzeugt sind, daß der zu unterteilende Zeitraum in die gewünschte Anzahl von Abschnitten unterteilt ist.

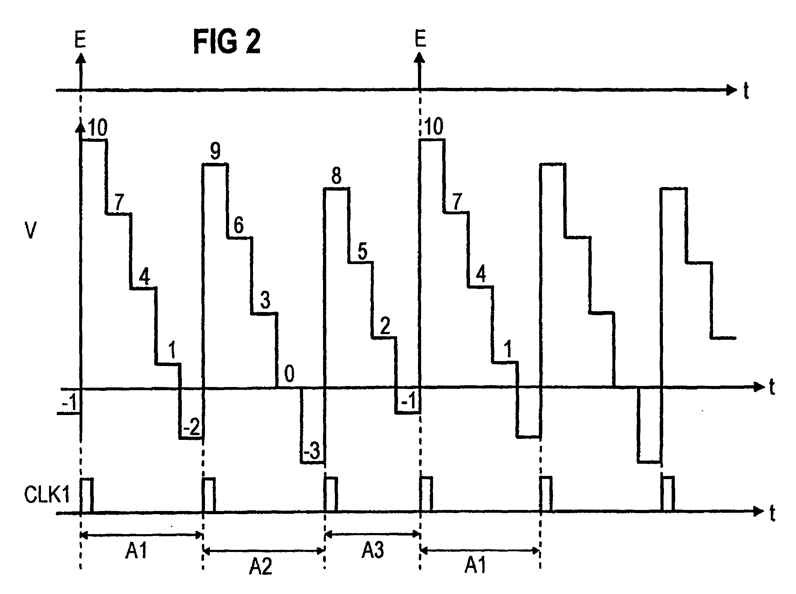

Die vorstehend beschriebenen Vorgänge werden nachfolgend anhand eines praktischen Beispiels unter Bezugnahme auf Figur 2 veranschaulicht.

Dabei wird davon ausgegangen, daß der zu unterteilende Zeitraum (der Zeitraum zwischen zwei externen Ereignissen) 14 Taktperioden des zweiten Taktsignals andauert, und daß dieser Zeitraum in 3 Abschnitte unterteilt werden soll. Es wird ferner davon ausgegangen, daß sich das System im stationären Zustand befindet; beim Anfahren des Systems und in Phasen mit dynamischen Veränderungen können sich vorübergehend andere Verhältnisse einstellen.

Die Figur 2 zeigt die externen Ereignisse (E) und die zeitlichen Verläufe des Inhalts des zweiten Registers 14 (Kurve V) und des den Zeitraum zwischen zwei externen Ereignissen unterteilenden Taktsignals (Kurve CLK1).

Der Zeitraum zwischen zwei externen Ereignissen wird durch die wie beschrieben erzeugten Taktsignale CLK1 wie gewünscht in 3 Abschnitte unterteilt, wobei der erste Abschnitt (A1) 5 Taktperioden des zweiten Taktsignals, der zweite Abschnitt (A2) 5 Taktperioden des zweiten Taktsignals, und der dritte Abschnitt (A3) 4 Taktperioden des zweiten Taktsignals andauert.

Die Darstellung gemäß Figur 2 ist zusammen mit den vorstehenden Ausführungen des Aufbaus, der Funktion und der Wirkungsweise der Anordnung gemäß Figur 1 ohne weiteres verständlich und bedarf keiner weiteren Erläuterungen.

Die beschriebene Art und Weise der Taktsignalerzeugung erweist sich in mehrfacher Hinsicht als vorteilhaft.

Einer der Vorteile besteht darin, daß die im Stand der Technik meistens vorgenommene Division der die Zeit zwischen zwei externen Ereignissen repräsentierenden Größe durch eine wiederholte Subtraktion ersetzt wird, wodurch die Taktsignalerzeugung einerseits praktisch besonders einfach realisierbar wird, und andererseits flexibler an die gegebenen Verhältnisse anpaßbar ist.

Der Grund für die einfachere praktische Realisierbarkeit liegt vor allen darin, daß eine Division insbesondere dann, wenn der Divisor veränderlich sein soll, einen höheren technischen Aufwand erfordert als eine entsprechende wiederholte Subtraktion; der Grund für die erhöhte Flexibilität liegt vor allem darin, daß keine Einschränkung mehr darauf besteht, die zu unterteilenden Zeiträume in $2^n$ Abschnitte unterteilen zu müssen.

Die Ersetzung der Division durch eine wiederholte Subtraktion geht auf den Euklid'schen Divisionsalgorithmus zurück, wonach

$$N = Q \cdot D + R$$

gilt, wobei N, Q, D und R ganzzahlige Größen sind und wobei - bezogen auf den vorliegenden Anwendungsfall -

N eine die Dauer des zu unterteilenden Zeitraums repräsentierende Größe,

D die Anzahl die Abschnitte, in die der zu unterteilende Zeitraum zu unterteilen ist,

Q eine die Länge der D Abschnitte repräsentierende Größe, und

R den Rest der Division

bezeichnen.

Dabei wird im vorliegend betrachteten Beispiel, und dies ist bereits der zweite Vorteil der beschriebenen Taktsignalerzeugung, der Rest R automatisch möglichst gleichmäßig auf die einzelnen Abschnitte, in die der zu unterteilende Zeitraum unterteilt wird, verteilt. Genauer gesagt wird der zu unterteilende Zeitraum (N) in D-R Abschnitte der Länge Q und R Abschnitte der Länge Q+1 aufgeteilt, wobei - wenn für N die Anzahl der zwischen zwei externen Ereignissen auftretenden Taktperioden des zweiten Taktsignals verwendet wird - Q und Q+1 die Anzahlen der Taktperioden des zweiten Taktsignals pro Zeitabschnitt repräsentieren.

Diese gleichmäßige Verteilung des Restes wird dadurch bewerkstelligt, daß der Inhalt des zweiten Registers 14 nach der Erzeugung eines Taktimpulses nicht etwa einfach auf den Reload-Wert oder einen sonstigen konstanten Wert zurückgesetzt wird, sondern auf das Ergebnis der Addition des momentanen Registerinhalts und dem Reload-Wert gesetzt wird.

Grundsätzlich wäre es jedoch auch möglich, den Inhalt des zweiten Registers 14 nach der Erzeugung eines Taktimpulses auf den Reload-Wert oder einen sonstigen konstanten Wert zu setzen. Dann wäre zwar von den Abschnitten, in die der zu unterteilende Zeitraum unterteilt wird, der letzte Abschnitt um den Rest R größer (länger) als die anderen Abschnitte, doch dies kann in bestimmten Anwendungsfällen (in Anwendungsfällen, in denen dies keine Funktionsstörungen zur Folge hat) durchaus toleriert werden und tritt übrigens unter anderem auch bei der eingangs unter Bezugnahme auf die Figur 4 beschriebenen Anordnung auf. Bei der dort vorgenommenen Division (durch Rechtsverschieben des zu dividierenden Wertes) wird der Rest R nämlich einfach abgeschnitten und unberücksichtigt gelassen, wodurch er im Ergebnis ebenfalls dem letzten Abschnitt des zu unterteilenden Zeitraumes zugeschlagen wird.

Bei der beschriebenen Taktsignalerzeugung wird davon ausgegangen, daß der zeitliche Abstand zwischen dem letzten externen Ereignis und dem nächsten externen Ereignis genauso groß ist wie der Abstand zwischen dem vorletzten externen Ereignis und dem letzten externen Ereignis. Die zu steuernde Einrichtung 2 ist so ausgebildet, daß dies im stationären Betrieb der Fall ist. Mitunter (z. B. bei Veränderungen der Drehzahl der Welle) treten jedoch Unterschiede auf. Damit diese Unterschiede keine oder jedenfalls keinen wesentlichen Einfluß auf die Steuerung der zu steuernden Einrichtung nehmen können, wird durch die vorliegend betrachtete Steuereinrichtung überwacht, daß unter keinen Umständen zu viele oder wenig Taktimpulse erzeugt werden.

Dies wird durch das erste Register 12 und den Zähler 13 erreicht. Im ersten Register 12 ist die Anzahl der Abschnitte gespeichert, in die der zu unterteilende Zeitraum unterteilt werden soll. Der Inhalt des Registers 12 wird zu gewissen Zeitpunkten, die im Normalfall mit dem Auftreten eines externen Ereignisses zusammenfallen, als Zählwert in den ersten Zähler 13 geschrieben, und der erste Zähler 13 verringert diesen Zählwert im Takt der erzeugten (den Zeitraum zwischen zwei externen Ereignissen unterteilenden) Taktimpulse (im Takt des Taktsignals CLK1).

Normalerweise, d.h. wenn die Zeiten zwischen aufeinanderfolgenden externen Ereignissen konstant sind, hat der Zählwert des Zählers 13 beim Auftreten eines externen Ereignisses gerade den Wert Null erreicht. Ist die Zeit zwischen zwei externen Ereignissen kürzer als erwartet, so hat der Zählstand des Zählers 13 beim Auftreten des externer Ereignisses noch nicht den Wert Null erreicht. Daraufhin werden (unabhängig vom Inhalt des zweiten Registers 14) in möglichst schneller Aufeinanderfolge so viele Taktimpulse erzeugt, bis der Zählstand des Zählers 13 den Wert Null erreicht hat; erst danach werden die normalerweise beim Auftreten eines externen Ereignisses vorzunehmenden Handlungen durchgeführt. Ist die Zeit zwischen zwei externen Ereignissen länger als erwartet, so hat der Zählstand des Zählers 13 schon mehr oder weniger lange vor dem Auftreten des externen Ereignisses den Wert Null erreicht. Daraufhin wird die Erzeugung weiterer Taktimpulse unterbunden; nach dem Auftreten des erwarteten externen Ereignisses wird die Taktimpulserzeugung in üblicher Weise fortgesetzt.

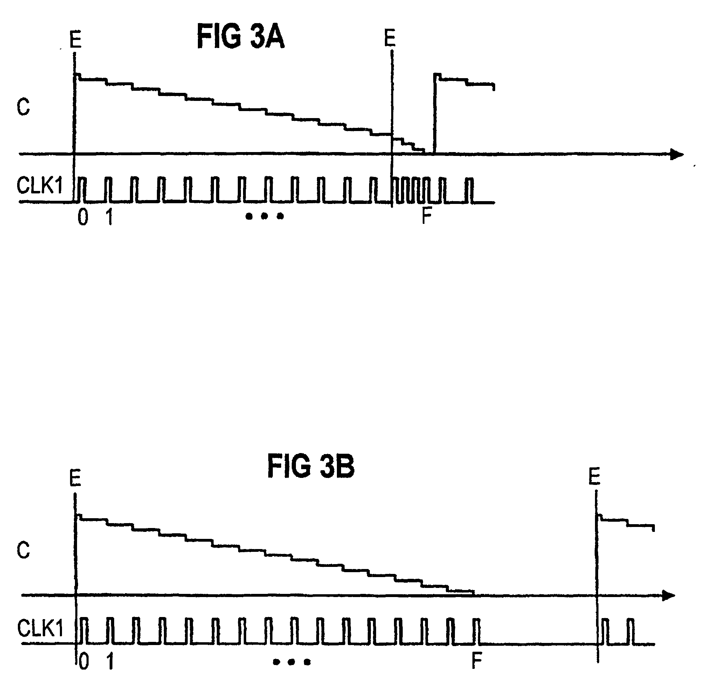

Diese Vorgänge sind in den Figuren 3A und 3B veranschaulicht, wobei die Figur 3A die Verhältnisse zeigt, die auftreten, wenn die Zeit zwischen zwei externen Ereignissen kürzer als erwartet ist, und wobei die Figur 3B die Verhältnisse zeigt, die auftreten, wenn die Zeit zwischen zwei externen Ereignissen länger als erwartet ist. Dabei bezeichnen in beiden Fällen E das Auftreten eines externen Ereignisses, C den Zählstand des Zählers 13, und CLK1 das zu erzeugende Taktsignal CLK1. Bei der Darstellung in den Figuren 3A und 3B wurde davon ausgegangen, daß zwischen zwei externen Ereignissen 16 Taktimpulse (Taktimpulse 0 bis F) zu erzeugen sind.

Wie aus den vorstehenden Erläuterungen hervorgeht, erweisen sich die beschriebene Vorrichtung und das beschriebene Verfahren im mehrfacher Hinsicht als vorteilhaft. Sie ermöglichen es, daß auf verblüffend einfache Weise Taktsignale erzeugt werden können, durch die ein Zeitraum in eine gewünschte Anzahl von im wesentlichen gleich großen Abschnitten unterteilt wird.

Bezugszeichenliste

| | |
|---|---|
| 1 | Steuereinrichtung |
| 2 | zu steuernde Einrichtung |
| 3 | Steuerleitungen |
| 11 | Managementeinheit |
| 12 | erstes Register |
| 13 | Zähler |
| 14 | zweites Register |
| 15 | drittes Register |
| 16 | viertes Register |
| 17 | Multiplexer |
| 18 | Addierer |
| 19 | Taktsignalerzeugungseinrichtung |
| 100 | Steuereinrichtung |
| 101 | erster Zähler |
| 102 | zweiter Zähler |
| 103 | erstes Register |
| 104 | zweites Register |
| 105 | Vergleicher |
| 106 | Impulserzeugungseinheit |
| 110 | zu steuernde Einrichtung |
| 120 | Steuerleitungen |
| CLK1 | zu erzeugendes Taktsignal |
| E | externer Ereignis |
| C | Zählstand des Zählers 13 |
| V | Inhalt des zweiten Registers 14 |

**Patentansprüche**

1. Verfahren zur Erzeugung von Taktsignalen, durch welche Zeiträume in eine gewünschte Anzahl von im wesentlichen gleich großen Abschnitten unterteilbar sind,
**dadurch gekennzeichnet,**

- **daß** die Taktsignale (CLK1) basierend auf den Ergebnissen einer wiederholten Subtraktion eines ersten Wertes von einem zweiten Wert erzeugt werden,

  - wobei der erste Wert gleich der Anzahl der Abschnitte ist, in die der zu unterteilende Zeitraum zu unterteilen ist,
  - wobei der zweite Wert zunächst gleich der in den zu unterteilenden Zeitraum fallenden Anzahl von Taktperioden eines zweiten Taktsignals (CLK2) minus der Anzahl der Abschnitte ist, in die der zu unterteilende Zeitraum zu unterteilen ist, und
  - wobei der zweite Wert nach jeder Subtraktion auf das Ergebnis der Subtraktion gesetzt wird,

- **daß** die Subtraktion des ersten Wertes vom zweiten Wert nur durchgeführt wird, wenn und so lange der zweite Wert größer oder gleich Null ist, und
- **daß** dann, wenn der zweite Wert kleiner Null ist, anstelle der Subtraktion des ersten Wertes eine Addition eines dritten Wertes durchgeführt wird, wobei der dritte Wert gleich der in den zu unterteilenden Zeitraum fallenden Anzahl von Taktperioden des zweiten Taktsignals (CLK2) minus der Anzahl der Abschnitte ist, in die der zu unterteilende Zeitraum zu unterteilen ist.

2. Verfahren nach Anspruch 1,
**dadurch gekennzeichnet,**
**daß** die Subtraktion unter Verwendung eines Addierers (18) durchgeführt wird, der das 2er-Komplement des ersten Wertes zum zweiten Wert addiert.

3. Verfahren nach Anspruch 1 oder 2,
**dadurch gekennzeichnet,**
**daß** die Subtraktionen und Additionen im Takt des zweiten Taktsignals (CLK2) erfolgen.

4. Verfahren nach einem der vorhergehenden Ansprüche,
**dadurch gekennzeichnet,**
**daß** die zu erzeugenden Taktsignale unter anderem immer dann erzeugt werden, wenn der zweite Wert kleiner Null wird oder war.

5. Verfahren nach einem der vorhergehenden Ansprüche,
**dadurch gekennzeichnet,**
**daß** die innerhalb eines zu unterteilenden Zeitraumes erzeugten Taktsignale gezählt werden.

6. Verfahren nach Anspruch 5,
**dadurch gekennzeichnet,**
**daß** dann, wenn die Anzahl der in einem jeweiligen Zeitraum erzeugten Taktsignale gleich der Anzahl der in diesem Zeitraum zu erzeugenden Taktsignale ist, die Erzeugung weiterer Taktsignale im betreffenden Zeitraum unterbunden wird.

7. Verfahren nach Anspruch 5 oder 6,
**dadurch gekennzeichnet,**
**daß** dann, wenn am Ende eines jeweiligen Zeitraumes die Anzahl der erzeugten Taktsignale kleiner als die Anzahl der in diesem Zeitraum zu erzeugenden Taktsignale ist, die Erzeugung der noch fehlenden Taktsignale schnell nachgeholt wird.

8. Vorrichtung zur Erzeugung von Taktsignalen, durch welche Zeiträume in eine gewünschte Anzahl von im wesentlichen gleich großen Abschnitten unterteilbar sind, wobei die besagte Vorrichtung Mittel zur Durchführung des Verfahrens nach Anspruch 1 enthält.

9. Vorrichtung nach Anspruch 8, die mit Mitteln versehen ist, so daß die Subtraktion unter Verwendung eines Addierers (18) durchgeführt wird, der das 2er-Komplement des ersten Wertes zum zweiten Wert addiert.

10. Vorrichtung nach Anspruch 8 oder 9, die mit Mitteln versehen ist, so daß die Subtraktionen und Additionen im Takt des zweiten Taktsignals (CLK2) erfolgen.

11. Vorrichtung nach einem der Ansprüche 8 bis 10, die mit Mitteln versehen ist, so daß die zu erzeugenden Taktsignale unter anderem immer dann erzeugt werden, wenn der zweite Wert kleiner Null wird oder war.

12. Vorrichtung nach einem der Ansprüche 8 bis 11, die mit Mitteln versehen ist, so daß die innerhalb eines zu unterteilenden Zeitraumes erzeugten Taktsignale gezählt werden.

13. Vorrichtung nach Anspruch 12, die mit Mitteln versehen ist, so daß dann, wenn die Anzahl der in einem jeweiligen Zeitraum erzeugten Taktsignale gleich der Anzahl der in diesem Zeitraum zu erzeugenden Taktsignale ist, die Erzeugung weiterer Taktsignale im betreffenden Zeitraum unterbunden wird.

14. Vorrichtung nach Anspruch 11 oder 12, die mit Mitteln versehen ist, so daß dann, wenn am Ende eines jeweiligen Zeitraumes die Anzahl der erzeugten Taktsignale kleiner als die Anzahl der in diesem Zeitraum zu erzeugenden Taktsignale ist, die Erzeugung der noch fehlenden Taktsignale schnell nachgeholt wird.

**Claims**

1. Method for generating clock signals, by means of which time periods can be subdivided into a required number of segments of essentially equal length,
   **characterized in that**

   - the clock signals (CLK1) are generated on the basis of the results of a repeated subtraction of a first value from a second value,

   - the first value being equal to the number of segments into which the time period to be subdivided is to be subdivided,
   - the second value initially being equal to the number of clock periods of a second clock signal (CLK2) falling within the time period to be subdivided, minus the number of segments into which the time period to be subdivided is to be subdivided, and
   - the second value being set to the result of the subtraction after every subtraction,

   - the subtraction of the first value from the second value is only performed if and so long as the second value is greater than or equal to zero, and
   - when the second value is less than zero, instead of subtracting the first value, a third value is added, the third value being equal to the number of clock periods of the second clock signal (CLK2) falling within the time period to be subdivided, minus the number of segments into which the time period to be subdivided is to be subdivided.

2. Method according to Claim 1,
   **characterized in that**
   the subtraction is performed using an adder (18), which adds the two's complement of the first value to the second value.

3. Method according to Claim 1 or 2,
   **characterized in that**
   the subtractions and additions are performed at the rate of the second clock signal (CLK2).

4. Method according to one of the previous claims,
   **characterized in that**
   the clock signals to be generated are then always generated, among other things, when the second value becomes or was less than zero.

5. Method according to one of the previous claims,
   **characterized in that**
   the clock signals generated within a time period to be subdivided are counted.

6. Method according to Claim 5,
   **characterized in that**
   when the number of clock signals generated in a given time period equals the number of clock signals to be generated in this time period, the generation of further clock signals in the time period concerned is disabled.

7. Method according to Claim 5 or 6,
   **characterized in that**
   when at the end of a given time period the number of generated clock signals is less than the number of clock signals to be generated in this period, the generation of the clock signals still missing is quickly made up.

8. Device for generating clock signals, by means of which time periods can be subdivided into a required number of segments of essentially equal length, the said device containing means for implementing the method according to Claim 1.

9. Device according to Claim 8, provided with means so that
the subtraction is performed using an adder (18), which adds the two's complement of the first value to the second value.

10. Device according to Claim 8 or 9, provided with means so that
the subtractions and additions are performed at the rate of the second clock signal (CLK2).

11. Device according to one of the Claims 8 to 10, provided with means so that
the clock signals to be generated are then always generated, among other things, when the second value becomes or was less than zero.

12. Device according to one of the Claims 8 to 11, provided with means so that
the clock signals generated within a time period to be subdivided are counted.

13. Device according to Claim 12,
provided with means so that
when the number of clock signals generated in a given time period equals the number of clock signals to be generated in this time period, the generation of further time signals in the time period concerned is disabled.

14. Device according to Claim 11 or 12 [sic],
provided with means so that
when at the end of a given time period the number of the generated clock signals is less than the number of clock signals to be generated in this period, the generation of the clock signals still missing is quickly made up.

**Revendications**

1. Procédé de création de signaux de cadençage par lesquels des laps de temps peuvent être divisés en un nombre souhaité de parties essentiellement de même grandeur, **caractérisé en ce que**

- les signaux de cadençage (CLK1) sont basés sur les résultats d'une soustraction répétée d'une première valeur par rapport à une deuxième valeur,

- la première valeur étant égale au nombre des parties dans lequel le laps de temps à diviser doit être divisé,

- la deuxième valeur étant d'abord égale au nombre, inclus dans le laps de temps à diviser, de périodes de cadençage d'un deuxième signal de cadençage (CLK2), moins le nombre des parties dans lequel le laps de temps à diviser doit être divisé, et

- la deuxième valeur étant placée sur le résultat de la soustraction après chaque soustraction,

- **en ce que** la soustraction de la première valeur par rapport à la deuxième valeur n'est réalisée que si et aussi longtemps que la deuxième valeur est supérieure ou égale à zéro, et

- **en ce que** lorsque la deuxième valeur est inférieure à zéro, au lieu de la soustraction de la première valeur, on exécute une addition d'une troisième valeur, la troisième valeur étant égale au nombre, inclus dans le laps de temps à diviser, de périodes de cadençage du deuxième signal de cadençage (CLK2) moins le nombre des parties en lequel le laps de temps à diviser doit être divisé.

2. Procédé selon la revendication 1, **caractérisé en ce que** la soustraction est exécutée en recourant à un additionneur (18) qui ajoute le deuxième complément de la première valeur à la deuxième valeur.

3. Procédé selon la revendication 1 ou 2, **caractérisé en ce que** les soustractions et additions s'effectuent à la cadence du deuxième signal de cadençage (CLK2).

4. Procédé selon l'une des revendications précédentes, **caractérisé en ce que** les signaux de cadençage à créer sont créés entre autres toujours lorsque la deuxième valeur est ou a été inférieure à zéro.

5. Procédé selon l'une des revendications précédentes, **caractérisé en ce que** les signaux de cadençage créés à l'intérieur d'un laps de temps à diviser sont comptés.

6. Procédé selon la revendication 5, **caractérisé en ce que** lorsque le nombre des signaux de cadençage créés dans un laps de temps concerné est égal au nombre des signaux de cadençage à créer dans ce laps de temps, la création d'autres signaux de cadençage est interrompue dans le laps de temps concerné.

7. Procédé selon la revendication 5 ou 6, **caractérisé**

**en ce que** lorsqu'à la fin d'un laps de temps concerné, le nombre des signaux de cadençage créés est inférieur au nombre des signaux de cadençage qui doivent être créés dans ce laps de temps, la création des signaux de cadençage encore manquants est reprise rapidement.

8. Dispositif pour la création de signaux de cadençage par lesquels des laps de temps peuvent être divisés en un nombre souhaité de parties essentiellement de même grandeur, ledit dispositif contenant des moyens en vue de la mise en oeuvre du procédé selon la revendication 1.

9. Dispositif selon la revendication 8, qui est doté de moyens tels que la soustraction est exécutée en recourtant à un additionneur (18) qui ajoute le deuxième complément de la première valeur à la deuxième valeur.

10. Dispositif selon la revendication 8 ou 9, qui est doté de moyens tels que les soustractions et additions s'effectuent à la cadence du deuxième signal de cadençage (CLK2).

11. Dispositif selon l'une des revendications 8 à 10, qui est doté de moyens tels que les signaux de cadençage à créer sont créés entre autres toujours lorsque la deuxième valeur est ou a été inférieure à zéro.

12. Dispositif selon l'une des revendications 8 à 11, qui est doté de moyens tels que les signaux de cadençage créés à l'intérieur d'un laps de temps à diviser sont comptés.

13. Dispositif selon la revendication 12, qui est doté de moyens tels que lorsque le nombre des signaux de cadençage créés dans un laps de temps concerné est égal au nombre des signaux de cadençage à créer dans ce laps de temps, la création d'autres signaux de cadençage est interrompue dans le laps de temps concerné.

14. Dispositif selon la revendication 11 ou 12, qui est doté de moyens tels que lorsqu'à la fin d'un laps de temps concerné, le nombre des signaux de cadençage créés est inférieur au nombre des signaux de cadençage qui doivent être créés dans ce laps de temps, la création des signaux de cadençage encore manquants est reprise rapidement.

# FIG 1

FIG 2

EP 1 101 162 B1

## FIG 3A

## FIG 3B

**FIG 4**

100

120

110

101 ← CLK2

103

104

102 ← CLK2

105

106 → CLK1